# FASCICULE DE BREVET EUROPEEN

(11) **EP 3 784 958 B1**
(45) Date de publication et mention de la délivrance du brevet: **01.06.2022**
(21) Numéro de dépôt: 19726043.3
(22) Date de dépôt: 10.04.2019
(51) Int. Cl.: F23R 3/12, F23R 3/14, F23R 3/28

(54) **SYSTÈME D'INJECTION POUR UNE CHAMBRE ANNULAIRE DE COMBUSTION DE TURBOMACHINE**
EINSPRITZSYSTEM FÜR EINE ANNULARE VERBRENNUNGSKAMMER EINER GASTURBINE
INJECTION SYSTEM FOR AN ANNULAR COMBUSTION CHAMBER OF A GAS TURBINE

(30) Priorité: 24.04.2018 FR 1853573
(43) Date de publication de la demande: 03.03.2021
(73) Titulaire: Safran Aircraft Engines, 75015 Paris (FR)
(72) Inventeur: BOURGOIS, Sébastien, Alain, Christophe, 77550 MOISSY-CRAMAYEL (FR); LUNEL, Romain, Nicolas, 77550 MOISSY-CRAMAYEL (FR); MUSAEFENDIC, Haris, 77550 MOISSY-CRAMAYEL (FR)
(74) Mandataire: Gevers & Orès
(86) Numéro de dépôt international: PCT/FR2019/050839
(87) Numéro de publication internationale: WO 2019/207230

(56) Documents cités:
- EP-A1- 1 840 467
- EP-A1- 1 873 455
- EP-A1- 3 141 818
- EP-A2- 0 286 569
- EP-A2- 1 600 693
- JP-A- 2011 528 098
- US-A- 3 703 259

## Description

### DOMAINE TECHNIQUE

La présente invention concerne un système d'injection, en particulier d'un mélange d'air et de carburant, pour une chambre annulaire de combustion de turbomachine.

### ETAT DE L'ART

Les demandes FR-A1-2 918 716, FR-A1-2 925 146, FR-A1-2 941 288, FR-A1-2 975 467, EP-A2-1 600 693 (qui divulgue le préambule de la revendication 1), EP-A1-1 840 467,

EP-A1-1 873 455, EP-A1-3 141 818, JP-A-2011 528098, US-A-3 703 259 et EP-A2-0 286 569 décrivent des systèmes d'injection pour turbomachine.

Une turbomachine comprend un générateur de gaz comportant notamment un ou plusieurs compresseurs, par exemple basse pression et haute pression, disposé(s) en amont d'une chambre de combustion.

Par convention, dans la présente demande, les termes « amont » et « aval » sont définis par rapport au sens de circulation des gaz dans la turbomachine. De même, par convention dans la présente demande, les termes « interne » et « externe » sont définis radialement par rapport à l'axe longitudinal de la turbomachine, qui est notamment l'axe de rotation des rotors des compresseurs.

Traditionnellement, la chambre de combustion est annulaire et placée dans une enceinte annulaire délimitée radialement par un carter annulaire externe et un carter annulaire interne. La chambre de combustion est délimitée par des parois annulaires interne et externe coaxiales réunies en amont par un fond de chambre, également annulaire, et sensiblement transversal.

La chambre de combustion est notamment alimentée en air comprimé provenant par exemple d'un compresseur haute pression disposé en amont de la chambre de combustion via notamment un diffuseur annulaire, et en carburant via des systèmes d'injection répartis angulairement autour de l'axe de révolution de la chambre.

Un système d'injection classique comprend des moyens de support et de centrage d'une tête d'injecteur, et des vrilles primaire et secondaire qui délivrent chacune des flux d'air en aval de l'injecteur afin de réaliser un mélange d'air et de carburant destiné à être injecté puis brûlé dans la chambre de combustion. Un bol mélangeur de forme tronconique est monté en aval des vrilles pour la pulvérisation du mélange air/carburant qui entre dans la chambre de combustion.

Les vrilles du système d'injection comportent chacune une pluralité d'aubages délimitant entre eux des canaux inclinés de passage d'air pour imprimer à l'air un mouvement de rotation autour de l'axe de la vrille, ce qui permet de créer une zone de recirculation permettant de stabiliser la flamme, et une zone de cisaillement favorisant l'atomisation de la nappe carburant dans la chambre.

On connaît deux types de vrilles pour un système d'injection du type précité, les vrilles radiales et les vrilles axiales. Les termes « radiales » et « axiales » sont ici définis par rapport à l'axe du système d'injection et non pas de la turbomachine. Les vrilles radiales sont disposées axialement l'une derrière l'autre et ont des canaux qui s'étendent radialement. Les vrilles axiales sont disposées radialement l'une autour de l'autre et ont des canaux qui s'étendent axialement.

Les moyens précités de support et de centrage de la tête d'injecteur comportent une surface tronconique qui est évasée vers l'amont et qui est reliée par son extrémité aval, qui est donc celle de plus petit diamètre, à l'extrémité amont d'une surface cylindrique. La tête de l'injecteur est apte à coopérer par glissement avec la surface tronconique pour centrer l'injecteur, puis avec la surface cylindrique. La tête de l'injecteur est alors insérée dans les moyens de support et de centrage.

Dans la technique actuelle d'un système d'injection à vrilles axiales, les vrilles axiales sont disposées autour de la surface cylindrique et en aval de la surface tronconique. La surface tronconique a un diamètre externe supérieur au diamètre de la vrille primaire (ou vrille radialement interne) si bien que cette surface tronconique et donc les moyens de support et de centrage « cache » la vrille primaire/interne et gêne son alimentation en air, ainsi que, dans une moindre mesure, la vrille secondaire/externe. Les lignes de courant alimentant les vrilles axiales sont ainsi déviées par les moyens de support et de centrage.

L'objectif de la présente invention est d'apporter une solution simple, efficace et économique à ce problème.

### EXPOSE DE L'INVENTION

L'invention propose à cet effet un système d'injection pour une chambre annulaire de combustion de turbomachine, comportant :
- des moyens de support et de centrage d'une tête d'injecteur de carburant, ces moyens comportant une surface tronconique reliée à son extrémité aval de plus petit diamètre à une extrémité amont d'une surface cylindrique,
- un bol mélangeur d'air et de carburant agencé en aval desdits moyens, et
- au moins une vrille axiale s'étendant au moins en partie autour desdits moyens, la ou chaque vrille comportant des aubages délimitant entre eux des canaux sensiblement axiaux de passage d'un flux d'air,
caractérisé en ce que lesdits canaux débouchent à leurs extrémités amont sur ladite surface tronconique.

L'invention permet de conserver les fonctions et les avantages des moyens de support et de centrage et des vrilles, en supprimant l'inconvénient évoqué plus haut. Pour cela, les canaux de la vrille ou des vrilles débouchent à l'amont sur la surface tronconique. Ils ne sont ainsi plus gênés par les moyens de support et de centrage car ils peuvent être alimentés par de l'air s'écoulant axialement autour et le long de l'injecteur.

Le système selon l'invention peut comprendre une ou plusieurs des caractéristiques suivantes, prises isolément les unes des autres ou en combinaison les unes avec les autres :
- le système comprend deux vrilles axiales et coaxiales, dont les canaux débouchent à leurs extrémités amont sur ladite surface tronconique,
- lesdits aubages s'étendent jusqu'à ladite surface tronconique et définissent en partie cette surface tronconique,
- ladite surface tronconique comprend au moins une rangée annulaire d'orifices d'alimentation en air desdits canaux,
- lesdits aubages sont en retrait axial par rapport à ladite surface tronconique ; le termes « axial » est ici défini par rapport à l'axe du système d'injection,
- ladite surface tronconique comprend au moins une ouverture annulaire d'alimentation en air desdits canaux,
- lesdits aubages sont interrompus et comprennent chacun au moins deux portions d'aubage disposés axialement d'amont en aval, c'est-à-dire l'un derrière l'autre,
- la ou chaque vrille est définie entre deux parois cylindriques, respectivement externe et interne, s'étendant l'une autour de l'autre, la paroi externe comportant une rangée annulaire de lumières traversantes d'alimentation en air de cette vrille,
- ladite surface tronconique est interrompue par une encoche conformée pour recevoir ledit injecteur de carburant.

L'invention concerne également une turbomachine comprenant une chambre de combustion équipée d'un système tel que précédemment décrit.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue de détail d'une demi-section longitudinale d'une turbomachine illustrant notamment une chambre de combustion de la turbomachine, cette turbomachine étant équipée de systèmes d'injection à vrilles radiales ;
- la figure 2 est une vue de détail d'un système d'injection à vrilles axiales d'une chambre de combustion de turbomachine ;
- la figure 3 est une vue simplifié du système de la figure 2 ;
- les figures 4 et 5 sont des vues schématiques d'un premier mode de réalisation de l'invention, respectivement en perspective et en coupe axiale ;
- les figures 6 et 7 sont des vues schématiques d'un second mode de réalisation de l'invention, respectivement en perspective et en coupe axiale ;
- les figures 8 et 9 sont des vues schématiques d'un troisième mode de réalisation de l'invention, respectivement en perspective et en coupe axiale ;
- la figure 10 est une vue schématique en perspective d'un quatrième mode de réalisation de l'invention ;
- la figure 11 est une vue schématique en perspective d'un cinquième mode de réalisation de l'invention ; et
- la figure 12 est une vue schématique en perspective d'un sixième mode de réalisation de l'invention.

### DESCRIPTION DETAILLEE

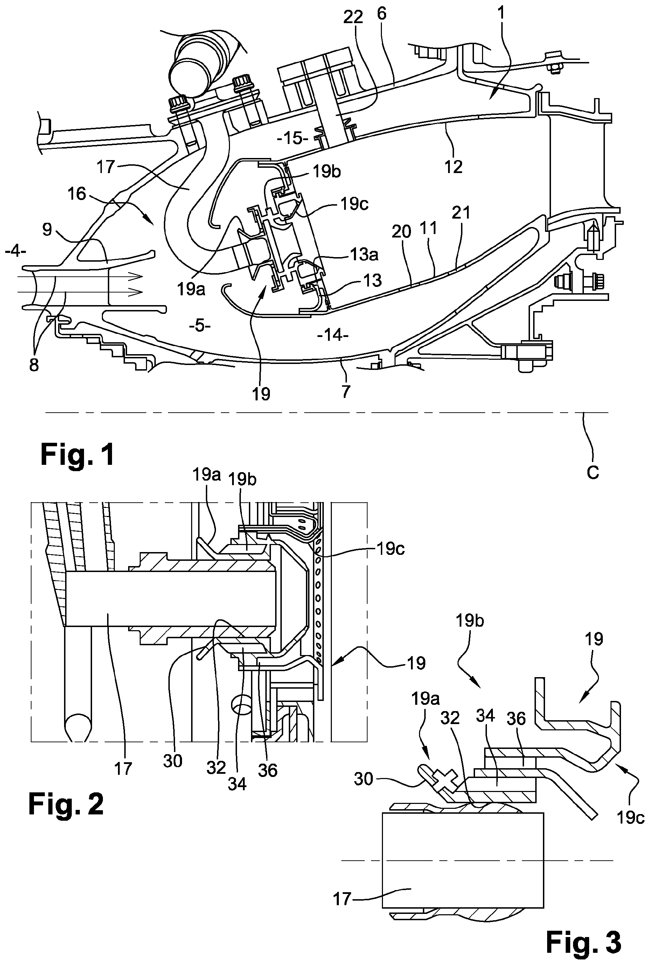

Sur la figure 1 est représentée une chambre 1 annulaire de combustion, d'axe C de révolution, d'un générateur de gaz d'une turbomachine d'aéronef.

La chambre 1 de combustion est placée en aval d'un ou plusieurs compresseurs, par exemple basse pression et haute pression, et en amont d'une ou plusieurs turbines, par exemple basse pression et haute pression.

L'axe C de révolution de la chambre 1 de combustion est confondu avec l'axe longitudinal de la turbomachine, qui est notamment l'axe de rotation des rotors des compresseurs et turbines.

Selon le mode de réalisation illustré sur les figures et notamment la figure 1, la chambre 1 de combustion est notamment placée en aval d'un compresseur 4 centrifuge haute pression.

Plus précisément, la chambre 1 est placée dans une enceinte 5 annulaire délimitée radialement par un carter 6 annulaire externe et un carter 7 annulaire interne. Le flux d'air 8 comprimé généré par le compresseur 4 débouche dans l'enceinte 5 via un diffuseur 9 annulaire.

La chambre 1 de combustion est délimitée par des parois 11, 12 annulaires interne et externe coaxiales réunies en amont par un fond 13 de chambre 1 sensiblement transversal.

Plus précisément, selon le mode de réalisation illustré sur les figures, la chambre 1 est sensiblement centrée radialement dans l'enceinte 5 de manière à définir d'une part un passage 14 d'air interne, annulaire, délimité radialement par la paroi 11 interne et le carter 7 interne, et d'autre part un passage 15 d'air externe, annulaire, délimité radialement par la paroi 12 externe et le carter 6 externe.

La chambre 1 est alimentée avec un mélange d'air et de carburant par plusieurs dispositifs d'injection 16 d'air et de carburant répartis angulairement de manière régulière autour de l'axe C. Plus précisément, chaque dispositif d'injection 16 comprend un injecteur de carburant 17 et un système d'injection d'air 19.

L'injecteur 17 est coudé et a une extrémité fixée au carter externe 6 et une extrémité opposée formant une tête qui est engagée et centrée dans le système d'injection 19.

Le système d'injection 19 est fixé sur le fond 13 et plus exactement monté dans un orifice 13a du fond 13, pour permettre de pulvériser le mélange d'air et de carburant dans la chambre 1.

Le système d'injection 19 comprend, de l'amont vers l'aval, des moyens 19a de support et de centrage de la tête de l'injecteur 17, des moyens 19b d'injection d'air, et des moyens 19c de diffusion d'un mélange air-carburant dans la chambre.

La chambre 1 est ainsi alimentée en air comprimé par le système d'injection 19, cet air comprimé étant mélangé au carburant apporté par les injecteurs 17.

La chambre 1 est également alimentée en air comprimé via notamment des trous 20 dits « primaires » (par exemple une rangée circonférentielle sur la paroi 11 interne et sur la paroi 12 externe) et via des trous 21 « de dilution » (par exemple une rangée circonférentielle sur la paroi 11 interne et sur la paroi 12 externe) situés en aval des trous 20 primaires. Les trous 20, 21 primaires et de dilution sont alimentés en air via les passages 14, 15 d'air interne et externe.

La combustion du mélange air/carburant est initiée via un ou plusieurs dispositifs 22 d'allumage fixés sur la paroi 12 externe. Selon l'exemple illustré, les dispositifs 22 d'allumage sont situés longitudinalement au niveau des trous 20 primaires.

Afin de refroidir les parois 11, 12 interne et externe de la chambre 1 de combustion, ces dernières comprennent une pluralité de trous de refroidissement, généralement inclinés, répartis sous forme de rangées circonférentielles, de manière à réaliser un refroidissement communément appelé « par multiperforation ».

La figure 1 représente un premier type ou une première technologie de système d'injection 19 dans lequel les moyens 19b d'injection d'air sont à vrilles radiales (par rapport à l'axe du système d'injection).

Les figures 2 et 3 représentent un second type ou une seconde technologie de système d'injection 19 dans lequel les moyens 19b d'injection d'air sont à vrilles axiales (par rapport à l'axe du système d'injection).

Classiquement, les moyens 19a de support et de centrage de la tête de l'injecteur comportent une surface tronconique 30 reliée à son extrémité aval de plus petit diamètre à une extrémité amont d'une surface cylindrique 32. Les vrilles axiales, respectivement interne 34 et externe 36, s'étendent autour de la surface 32 et en aval de la surface 30. La surface tronconique 30 a un diamètre interne qui est égal au diamètre interne de la surface 32, et qui est inférieur aux diamètres internes et externes des vrilles 34, 36. La surface tronconique 30 a un diamètre externe qui est supérieur au diamètre externe de la vrille 34, voire au diamètre interne de la vrille 36, comme cela est représenté dans les figures.

L'inconvénient majeur de cette dernière technologie est lié au fait que la surface tronconique 30 s'étend en amont des vrilles et gêne leur alimentation en air, ce qui est schématiquement représenté par la croix sur la figure 3. Ceci a un impact négatif sur les performances globales du système d'injection et donc de la chambre de combustion dans son ensemble.

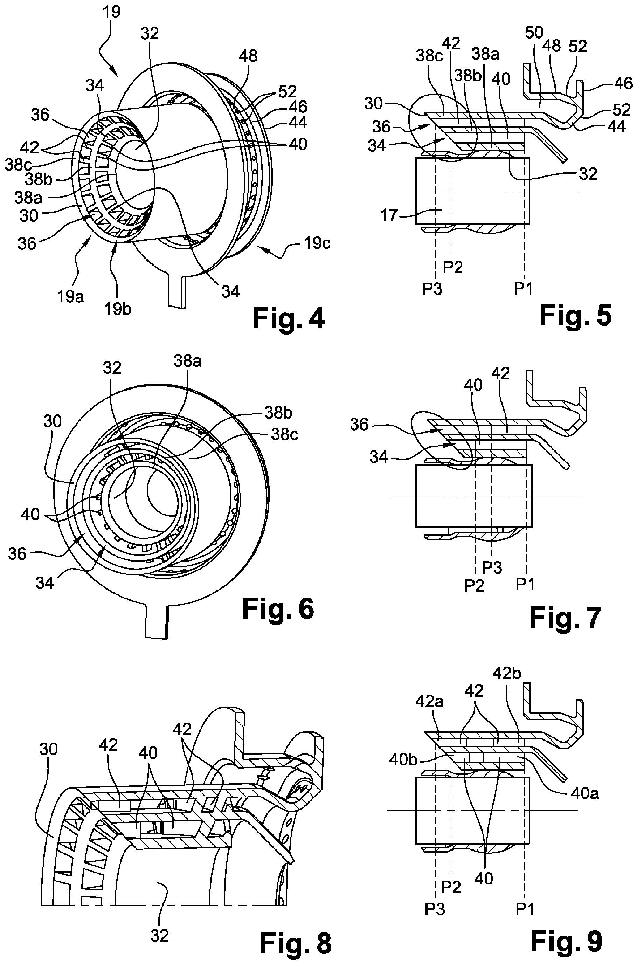

Les figures 4 et 5 illustrent un premier mode de réalisation de l'invention dans lequel les éléments déjà décrits dans ce qui précède sont désignés par les mêmes chiffres de référence.

Les moyens 19a de support et de centrage du système d'injection 19 comprennent une surface tronconique 30 et une surface cylindrique 32 coaxiale, la surface cylindrique s'étendant vers l'aval depuis l'extrémité de plus petit diamètre de la surface tronconique.

Les vrilles interne 34 et externe 36 s'étendent coaxialement l'une autour de l'autre et autour de la surface cylindrique 32.

La vrille interne 34 est délimitée par deux parois annulaires 38a, 38b, coaxiales, qui sont reliées l'une à l'autre par des aubages 40. La paroi interne 38a est sensiblement cylindrique et la paroi externe 38b comprend une portion amont cylindrique s'étendant autour de la paroi 38a, et une portion tronconique s'étendant en aval de la paroi 38a et orientée de l'amont vers l'aval vers l'intérieur.

La vrille externe 36 est délimitée par la paroi 38b et une autre paroi annulaire 38c, coaxiale, les parois 38b, 38c étant reliées l'une à l'autre par des aubages 42. La paroi externe 38c comprend une portion amont cylindrique s'étendant autour de la paroi 38b, et une portion aval reliée au bol 44 des moyens de diffusion 19c.

Dans l'exemple représenté, le bol 44 est tronconique et évasé vers l'aval. Il est relié à une collerette annulaire externe 46 et à une paroi cylindrique 48 de montage du système d'injection 19 dans l'ouverture 13a précitée du fond de chambre 13. La portion aval de la paroi 38c et/ou le bol 44 défini(ssen)t avec la paroi 48 une cavité annulaire 50 de circulation d'air, cet air étant destiné à passer à travers des perçages 52 du bol ou de la paroi, en particulier pour venir impacter et ainsi refroidir la collerette 46 destinée à être située à l'intérieur de la chambre de combustion.

Les aubages 40, 42 des vrilles 34, 36 définissent entre eux des canaux qui s'étendent axialement. Les extrémités aval des canaux ainsi que des aubages 40, 42 sont situés dans un plan transversal P1, perpendiculaire à l'axe du système.

Les extrémités amont des canaux ainsi que des aubages 40, 42 sont situés sur la surface tronconique 30. Les extrémités amont des canaux ainsi que des aubages 40, 42 sont situées dans des plans transversaux P2 et P3 situés sur la surface 30. Autrement dit, les canaux des vrilles débouchent à leurs extrémités amont sur la surface tronconique.

La figure 4 permet d'illustrer le fait que la surface tronconique 30 est formée en partie par les extrémités amont des parois 38a, 38b et 38c ainsi que par les extrémités amont des aubages 40, 42. Ainsi, chacune des parois 38a, 38b et 38c a son extrémité amont qui est biseautée et est inclinée d'amont en aval vers l'intérieur de l'axe du système. L'extrémité amont de chaque aubage 40, 42 est biseautée et est inclinée d'amont en aval vers l'intérieur de l'axe du système. Les extrémités biseautées ont des angles de cône identiques.

La surface 32 comprend deux rangées annulaires d'orifices d'alimentation en air des canaux des vrilles.

La variante de réalisation des figures 6 et 7 diffère du précédent mode de réalisation essentiellement par la longueur des aubages 40, 42.

Les extrémités aval des canaux ainsi que des aubages 40, 42 sont situées dans un plan transversal P1, perpendiculaire à l'axe du système. Les extrémités amont des canaux sont situées sur la surface tronconique 30, mais les extrémités amont des aubages sont en retrait par rapport à la surface 30. Les extrémités amont des aubages 40, 42 sont situées dans des plans transversaux P2 et P3 en retrait par rapport à la surface 30. Dans l'exemple représenté, P2 est en amont de P3 mais l'inverse est envisageable.

La surface tronconique 30 comprend deux ouvertures annulaires d'alimentation en air des canaux des vrilles.

La variante de réalisation des figures 8 et 9 diffère du premier mode de réalisation essentiellement par les aubages 40, 42. Ces aubages sont ici interrompus et comprennent chacun au moins deux portions d'aubage 40a, 40b, 42a, 42b disposés axialement l'un derrière l'autre. Les extrémités aval des canaux ainsi que des aubages 40, 42 sont situés dans un plan transversal P1, et les extrémités amont des canaux ainsi que des aubages 40, 42 sont situés dans des plans transversaux P2 et P3 situés sur la surface 30.

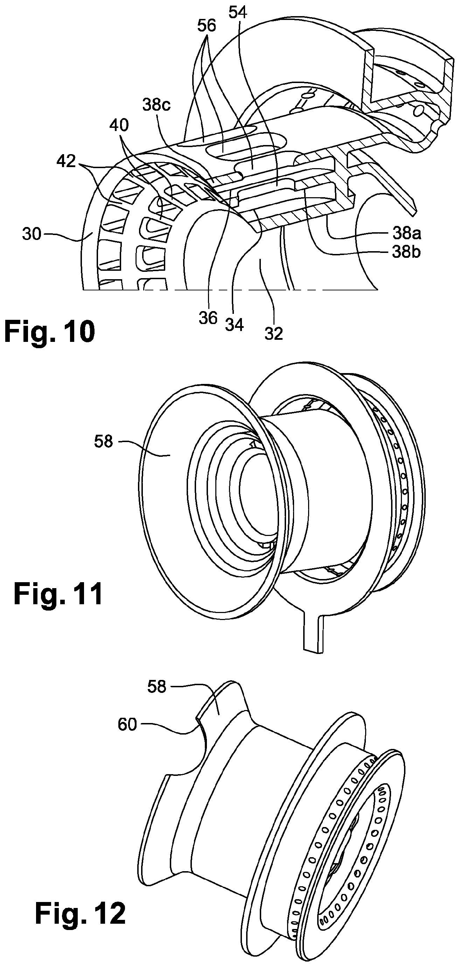

La variante de réalisation de la figure 10 diffère du premier mode de réalisation essentiellement par les parois 38b, 38c, qui comprennent chacune ici une rangée annulaire de lumières 54, 56 traversantes d'alimentation en air. Les lumières 54 de la paroi 38b permettent d'alimenter en air la vrille interne 34 et les lumières 56 de la paroi 38c permettent d'alimenter en air la vrille externe 36, ainsi que la vrille interne 34 car l'air qui passe à travers les lumières 54 doit d'abord passer par les lumières 56.

La variante de réalisation de la figure 11 diffère du second mode de réalisation des figures 6 et 7 essentiellement par le fait que la paroi 38c est reliée à l'extrémité de plus petit diamètre d'un cône de centrage 58 qui est évasée vers l'amont. Le cône 58 a un angle de cône identique à celui des extrémités biseautés des parois 38a, 38b et 38c et s'étend dans la continuité de ces extrémités de façon à ce que la surface tronconique 30 des moyens de support et de centrage soit également formée et s'étende jusque dans ce cône.

La variante de réalisation de la figure 12 diffère du précédent mode de réalisation de la figure 11 essentiellement par le fait que le cône 58 comprend une encoche 60 conformée pour recevoir l'injecteur de carburant 17, et en particulier son bras coudé qui supporte la tête.

Dans tous les modes de réalisation décrits dans ce qui précède, de l'air est apte à pénétrer axialement dans les vrilles, sans contournement de parois, en longeant la tête de l'injecteur. Cet air est mis en rotation par les aubages des vrilles et un flux d'air tourbillonnaire est délivré en aval de la tête d'injection afin de mélanger l'air au carburant injecté dans la chambre, le mélange étant pulvérisé sous forme d'un cône grâce notamment au bol 44. Dans la variante de réalisation de la figure 10, les lumières 54, 56 permettent d'augmenter le débit d'alimentation en air des vrilles.

## Revendications

1. Système (19) d'injection pour une chambre annulaire (1) de combustion de turbomachine, comportant :
- des moyens (19a) de support et de centrage d'une tête d'injecteur de carburant (17), ces moyens comportant une surface tronconique (30) reliée à son extrémité aval de plus petit diamètre à une extrémité amont d'une surface cylindrique (32),
- un bol mélangeur d'air et de carburant (44) agencé en aval desdits moyens, **caractérisé en ce qu'**au moins une vrille axiale (34, 36) s'étend au moins en partie autour desdits moyens, la ou chaque vrille comportant des aubages (40, 42) délimitant entre eux des canaux sensiblement axiaux de passage d'un flux d'air, et
- les canaux débouchent à leurs extrémités amont sur ladite surface tronconique.

2. Système (19) selon la revendication précédente, dans lequel il comprend deux vrilles (34, 36) axiales et coaxiales, dont les canaux débouchent à leurs extrémités amont sur ladite surface tronconique (30).

3. Système (19) selon l'une des revendications précédentes, dans lequel lesdits aubages (40, 42) s'étendent jusqu'à ladite surface tronconique (30) et définissent en partie cette surface tronconique.

4. Système (19) selon l'une des revendications précédentes, dans lequel ladite surface tronconique (30) comprend au moins une rangée annulaire d'orifices d'alimentation en air desdits canaux.

5. Système (19) selon la revendication 1 ou 2, dans lequel lesdits aubages (40, 42) sont en retrait axial par rapport à ladite surface tronconique (30).

6. Système (19) selon la revendication précédente, dans lequel ladite surface tronconique (30) comprend au moins une ouverture annulaire d'alimentation en air desdits canaux.

7. Système (19) selon l'une des revendications précédentes, dans lequel lesdits aubages (40, 42) sont interrompus et comprennent chacun au moins deux portions (40a, 40b, 42a, 42b) d'aubage disposés axialement d'amont en aval.

8. Système (19) selon l'une des revendications précédentes, dans lequel la ou chaque vrille (34, 36) est définie entre deux parois cylindriques (38a, 38b, 38c), respectivement externe et interne, s'étendant l'une autour de l'autre, la paroi externe (38b, 38c) comportant une rangée annulaire de lumières (54, 56) traversantes d'alimentation en air de cette vrille.

9. Système (19) selon l'une des revendications précédentes, dans lequel ladite surface tronconique (30) est interrompue par une encoche (60) conformée pour recevoir ledit injecteur de carburant (17).

10. Turbomachine, comprenant une chambre (1) de combustion équipée d'au moins un système (19) selon l'une des revendications précédentes.

## Patentansprüche

1. System (19) zur Injektion für eine ringförmige Brennkammer (1) einer Turbomaschine, umfassend:
- Mittel (19a) zum Stützen und zum Zentrieren eines Kraftstoffinjektionskopfs (17), wobei diese Mittel eine kegelstumpfförmige Fläche (30) umfassen, die an ihrem stromabwärtigen Ende mit kleinerem Durchmesser mit einem stromaufwärtigen Ende einer zylindrischen Fläche (32) verbunden ist,
- ein Luft- und Brennstoffmischschale (44), der stromabwärtig von den Mitteln eingerichtet ist, **dadurch gekennzeichnet, dass** sich mindestens ein axialer Verwirbler (34, 36) mindestens teilweise um die Mittel erstreckt, wobei der oder jeder Verwirbler Beschaufelungen (40, 42) umfasst, die untereinander im Wesentlichen axiale Luftdurchgangskanäle begrenzen, und
die Kanäle an ihren stromaufwärtigen Enden an der kegelstumpfförmigen Fläche münden.

2. System (19) nach dem vorstehenden Anspruch, wobei es zwei axiale und koaxiale Verwirbler (34, 36) umfasst, deren Kanäle an ihren stromaufwärtigen Enden an der kegelstumpfförmigen Fläche (30) münden.

3. System (19) nach einem der vorstehenden Ansprüche, wobei sich die Beschaufelungen (40, 42) bis zur kegelstumpfförmigen Fläche (30) erstrecken und teilweise diese kegelstumpfförmige Fläche definieren.

4. System (19) nach einem der vorstehenden Ansprüche, wobei die kegelstumpfförmige Fläche (30) mindestens eine ringförmige Reihe von Luftzufuhröffnungen der Kanäle umfasst.

5. System (19) nach Anspruch 1 oder 2, wobei die Beschaufelungen (40, 42) relativ zu die kegelstumpfförmige Fläche (30) axial zurückgezogen sind.

6. System (19) nach dem vorstehenden Anspruch, wobei die kegelstumpfförmige Fläche (30) mindestens eine ringförmige Luftzufuhröffnung der Kanäle umfasst.

7. System (19) nach einem der vorstehenden Ansprüche, wobei die Beschaufelungen (40, 42) unterbrochen sind und jeweils mindestens zwei Beschaufelungsabschnitte (40a, 40b, 42a, 42b) umfassen, die axial stromaufwärtig bis stromabwärtig angeordnet sind.

8. System (19) nach einem der vorstehenden Ansprüche, wobei der oder jeder Verwirbler (34, 36) zwischen zwei zylindrischen inneren bzw. äußeren Wänden (38a, 38b, 38c), die sich umeinander erstrecken, definiert ist, wobei die äußere Wand (38b, 38c) eine ringförmige Reihe von durchgehenden Luftzufuhröffnungen (54, 56) dieses Verwirblers umfasst.

9. System (19) nach einem der vorstehenden Ansprüche, wobei die kegelstumpfförmige Fläche (30) durch einem angepassten Kerbe (60) unterbrochen ist, um den Kraftstoffinjektor (17) aufzunehmen.

10. Turbomaschine, umfassend eine Brennkammer (1), die mindestens mit einem System (19) nach einem der vorstehenden Ansprüche ausgestattet ist.

## Claims

1. An injection system (19) for an annular combustion chamber (1) of a turbine engine, comprising:
- means (19a) for supporting and centering a fuel injector head (17), these means comprising a frustoconical surface (30) connected at its downstream end of smallest diameter to an upstream end of a cylindrical surface (32),
- a bowl (44) for mixing air and fuel arranged downstream of said means, **characterized in that** at least one axial swirl inducer (34, 36) extends at least in part around said means, said or each swirl inducer comprising vanes (40, 42) delimiting between them substantially axial channels for the passage of an air flow, and said channels open at their upstream ends on said frustoconical surface.

2. The system (19) according to the preceding claim, wherein it comprises two axial and coaxial swirl inducers (34, 36), the channels of which open at their upstream ends on said frustoconical surface (30).

3. The system (19) according to one of the preceding claims, wherein said vanes (40, 42) extend to said frustoconical surface (30) and partially define this frustoconical surface.

4. The system (19) according to one of the preceding claims, wherein said frustoconical surface (30) comprises at least one annular row of orifices for supplying air to said channels.

5. The system (19) according to claim 1 or 2, wherein said vanes (40, 42) are axially recessed with respect to said frustoconical surface (30).

6. The system (19) according to the preceding claim, wherein said frustoconical surface (30) comprises at least one annular opening for supplying air to said channels.

7. The system (19) according to one of the preceding claims, wherein said vanes (40, 42) are interrupted and each comprise at least two vane portions (40a, 40b, 42a, 42b) arranged axially from upstream to downstream.

8. The system (19) according to one of the preceding claims, wherein said or each swirl inducer (34, 36) is defined between two cylindrical walls (38a, 38b, 38c), respectively outer and inner, extending one around the other, the outer wall (38b, 38c) comprising an annular row of through apertures (54, 56) for supplying air to this swirl inducer.

9. The system (19) according to one of the preceding claims, wherein said frustoconical surface (30) is interrupted by a notch (60) configured to receive said fuel injector (17).

10. A turbine engine, comprising a combustion chamber (1) equipped with at least one system (19) according to one of the preceding claims.
